Europäisches Patentamt

European Patent Office

Office européen des brevets

(19)

(11) **EP 0 802 496 A1**

(12) **EUROPEAN PATENT APPLICATION**

(43) Date of publication:
22.10.1997 Bulletin 1997/43

(51) Int. Cl.$^6$: **G06K 7/10**, G02B 26/10

(21) Application number: 96201039.3

(22) Date of filing: 18.04.1996

(84) Designated Contracting States:
NL

(71) Applicant: OPTICON SENSORS EUROPE B.V.
2132 NG Hoofddorp (NL)

(72) Inventor: Peng, Ke-Ou
NI-2612 KV Delft (NL)

(74) Representative: de Bruijn, Leendert C.
Nederlandsch Octrooibureau
P.O. Box 29720
2502 LS Den Haag (NL)

(54) **Multiple-directional optical scanner**

(57) An optical scanner provided with:

- a housing with a transparant scanning window (7),
- at least one light source (10a, 10b) to generate at least one light beam (11; 11a, 11b),
- deflection means (9; 13),
- driving means (20) to rotate the deflection means with a predetermined speed of rotation about an axis of rotation (14) in order to produce at least one sweeping light beam (12; 12a, 12b),
- first mirror means (21a) to produce a first scanning pattern of at least one scanning line on said scanning window (7) for scanning codes at a bottom surface of the object,
- second (21b) and third (21c) mirror means to produce a second and a third scanning pattern, respectively, on a first (8b) and second (8c) virtual plane, respectively, both planes being perpendicular to and extending outward from said scanning window (7) for scanning codes at a first and second side surface of the object, respectively.

fig-10

EP 0 802 496 A1

**Description**

The present invention relates to an optical scanner to scan a code on an object, comprising:

- a housing provided with a substantially flat, transparent scanning window to support said object,
- at least one light source to generate at least one light beam,
- deflection means,
- driving means connected to said deflection means to rotate the deflection means with a predetermined speed of rotation about an axis of rotation which has a predetermined angle of inclination with respect to said scanning window, said deflection means being arranged to receive said at least one light beam and to produce at least one sweeping light beam about said axis of rotation,
- first mirror means arranged to receive said at least one sweeping light beam and to produce a first scanning pattern of at least one scanning line on said scanning window for scanning codes at a bottom surface of the object,
- second mirror means arranged to receive said at least one sweeping light beam and to produce a second scanning pattern of at least one scanning line on a first virtual plane perpendicular to and extending outward from said scanning window for scanning codes at a first side surface of the object.

Such an optical scanner is known from U.S. patent 5,459,308.

When e.g., a bar code needs to be read it is sometimes impossible to predict its location on an object. Sometimes, it can be located at any arbitrary position and be oriented in an arbitrary direction. For instance, a bar code may be located at any side of a square-shaped box at an arbitrary location with an arbitrary orientation. Most optical scanners are not designed to allow scanning of such bar codes.

In U.S. patent 5,408,352, an optical scanner has been described in which a first mirror, which is tilted with respect to an axis of rotation, is rotated by suitable driving means to project an incident light beam to an array of mirrors, which surround the first mirror. Reflected by the array of mirrors, the light beam is directed to a second mirror, which is also tilted with respect to the rotation axis, and which rotates together with the first mirror, such that a space-invariant star-like scanning pattern on an object intersected by the axis of rotation is produced. The number of scanning lines produced with various orientations depend on the number of mirrors in the mirror array and their orientations with respect to the axis of rotation.

The scanning pattern produced by the scanner in accordance with U.S. patent 5,408,352, is rotationally symmetrical. Each point at the scanning locus (scanning pattern) in a plane normal to the axis of rotation has almost the same distance to the light source and to the focal optics used. In other words, the scanning spot in planes normal to the axis of rotation is of almost the same size. One of the planes normal to the axis of rotation is the focal plane in which the spot is minimized. In other planes normal to the axis of rotation the scanning spot becomes larger and the resolution decreases.

When a bar code is placed in a plane normal to the axis of rotation the resolution in the plane is the same and the length of the bar code which may be detected depends on the dimensions of the pattern produced.

However, when a bar code is not situated in a plane normal to the axis of rotation two problems arise. First of all, the light beam from the scanner will be closer to the axis of rotation and it will be very difficult to illuminate such a bar code. In the extreme situation that the bar code is located in a plane parallel to the axis of rotation, the bar code cannot be read. Secondly, the resolution varies as a function of the distance to the scanner, as mentioned above. The length of the bar code to be read depends on the maximum size of the scanning spot. The thinner the bar code, the shorter the required length of the bar code. If the bar code is longer than the defined longitudinal working range of the optical scanner in a direction of the axis of rotation, the scanner is not able to read the bar code at all.

In U.S. patent 5,459,308, from which the claims are delimited, a dual aperture optical scanner has been described. The dual aperture optical scanner produces one scanning pattern in a first plane in order to allow scanning of, e.g., bar codes at the bottom side of objects. Moreover, the known optical scanner produces a second scanning pattern in a second plane, substantially perpendicular to the first plane, in order to allow scanning of bar codes on a side surface of an object. In other words, the first scanning pattern illuminates an object from below whereas the second scanning pattern illuminates the object from a predetermined side. The first scanning pattern illuminates the object through a first transparent plate which, in operation, is substantially horizontally oriented in order to support the object to be scanned. The second scanning pattern is produced by a set of mirrors which, in operation, extend above the horizontal plane in which the first transparent plate is located. These mirrors direct the second scanning pattern through a second transparent plate which is, in operation, substantially vertically oriented. Since the means to produce the second scanning pattern to illuminate the object from the predetermined side, are extending beyond the horizontally located first transparent plate, which in operation supports the object, movement of the object in the horizontal direction is limited by the presence of the mirror means mentioned and the second transparent plate.

The object of the present invention is to provide an optical scanner able to produce at least three scanning patterns, one scanning pattern being able to illuminate an object from the bottom side and two scanning patterns being able to illuminate the object from two different predetermined sides.

A further object of the present invention is to provide such an optical scanner which is only provided with at least one transparent plate designed to support the objects to be scanned in the indicated way. In accordance with this object no further transparent plates or other elements from the optical scanner extending above the plane in which the transparent plate is located are necessary. Therefore, an optical scanner of the type mentioned above, is characterized in that

- said scanner further comprises at least third mirror means arranged to receive said at least one sweeping light beam and to produce a third scanning pattern of at least one scanning line on a second virtual plane perpendicular to and extending outward from said scanning window for scanning codes at a second side surface of the object,
- said second and third scanning pattern being formed by said second and third mirror means, respectively, by deflecting said at least one sweeping light beam towards said first and second virtual plane, respectively, such that it intersects said scanning window.

It is possible to design the first, second and third mirror means such that they produce the first, second and third scanning pattern, respectively, such that they allow scanning of an object from three orthogonal directions. The first scanning pattern is able to illuminate an object from below whereas the second and third scanning patterns are able to illuminate the object from two different sides. These sides may be perpendicular to one another. All the first, second and third mirror means are located at the same side of the transparent scanning window. Therefore, no elements extending beyond the transparent scanning window are necessary. Thus, an object supported by the scanning window may be moved in any direction parallel to the scanning window without being impeded in its freedom of movement.

Moreover, by moving the object in a direction parallel to the scanning window, both the second scanning and the third scanning pattern on the object are moved in a direction perpendicular to the scanning window, thus, enhancing the reading opportunity of, e.g., bar codes on side surfaces of the object.

In principle, it is possible to direct the first scanning pattern towards the scanning window in a direction substantially in a direction perpendicular to the scanning window. However, in one embodiment of the invention, the first scanning pattern on the scanning window is formed by the first mirror means by deflecting the at least one sweeping light beam towards the scanning window at a bevelled angle relative to the scanning window, such that codes on a third side surface of the object oriented such that they cannot be illuminated by either the second or the third scanning pattern, may be scanned by the first scanning pattern after having passed the scanning window. By directing the first scanning pattern at a bevelled angle relative to the scanning window, it is possible to illuminate side surfaces of the object to be scanned which are not able to be illuminated by the second or third scanning pattern. In such an arrangement, the first scanning pattern is intended both for illuminating, e.g., bar codes at the bottom side of the object to be scanned and a side surface of that object. In such an arrangement, essentially, only the upper surface of an object cannot be scanned. At the same time, any of the scanning patterns originate from a substantially flat surface which does not impede any movement of the object to be scanned in a direction parallel to the scanning window.

The first mirror means may be constructed as separate sets of mirror pairs, however, in one embodiment according to the invention, they are constructed to comprise a mirror array having a predetermined number of mirrors and a substantially flat mirror plate, each of the mirrors being arranged to receive the at least one sweeping light beam and deflect it towards the mirror plate. Preferably, the mirror plate is substantially parallel to the scanning window.

The second mirror means may comprise a first set of a predetermined number of mirror pairs, each mirror pair having two mirrors arranged in a predetermined relation relative to each other.

Similarly, the third mirror means may comprise a second set of a predetermined number of mirror pairs, each mirror pair having two mirrors arranged in a predetermined relation relative to each other.

In one embodiment of the scanner according to the invention, the deflection means comprises one rotatable mirror inclined with respect to the axis of rotation, wherein the at least one light beam, in operation, before impinging upon the rotatable mirror propagates substantially along the axis of rotation. The axis of rotation may be perpendicular to the scanning window. Such an embodiment uses only few elements. The light beam may be directed towards the single rotatable mirror along the axis of rotation by means of a suitably arranged further mirror. Alternatively, an arrangement with a motor having a hollow driving shaft, which is known per se, may be used to direct the single light beam along the axis of rotation towards the rotatable mirror.

Alternatively, the deflection means may comprise a rotatable polygon having a predetermined number of reflective facets.

In one embodiment in which a rotatable polygon is used, the polygon has four reflective facets and the scanner is provided with a first light source and a second light source arranged opposite the first light source, the first and second light source, in operation, transmitting a first and second light beam, respectively, towards the axis of rotation.

In such an arrangement the first and second light source may be connected to at least one power supply which is arranged to alternatively supply power to the first and second light source in synchronism with the speed of rotation of the polygon. Supplying alternating power to the first and second light source is needed to avoid a situation in which two or even more scanning lines are produced on the object to be scanned at the same time, which would lead to difficulties in evaluating detection signals received from the object. The application of two different laser beams provides for more complicated scanning patterns, thus enhancing the reading opportunity of, e.g., bar codes. An additional advantage is that the focal plane of the two light beams can be different such that one of them may be focused on the scanning window and the other one in the virtual planes, referred to above.

In the latter embodiment, the scanning pattern will have the most scanning lines if, in operation, the at least one power supply switches supplying power from any one of the first and second light source to the other of the first and second light source any time the polygon has completed one rotation period.

Two separate alternative light beams can, however, also be produced by using one single light source and additional optical means arranged to receive the light beam generated by the single light source and to direct the light beam towards the deflecting means from a first predetermined direction during a first part of any rotation in operation and to direct the light beam towards the deflecting means from a second direction, opposite to the first direction, during a second part of any rotation in operation.

Such additional optical means are described as optical "choppers" in U.S. patent 5,315,428 which is assigned to the assignee of the present invention. Any of the optical choppers as disclosed in any of the figures of this U.S. patent 5,315,428 are, therefore, incorporated herein by reference.

The invention will be explained in more detail below with reference to some drawings, which are intended to illustrate the invention and not to limit its scope.

Figure 1 shows an example of an object to be scanned;
Figure 2 schematically shows the upper surface of an optical scanner with a scanning window supporting the object to be scanned and able to produce scanning patterns on the object from three different directions;
Figure 3a shows schematically a top view of an optical scanner for producing three scanning patterns for illuminating the object to be scanned from three different directions;
Figure 3b shows an alternative embodiment of the arrangement according to figure 3a;
Figure 4 shows a schematic cross-section through two mirrors of a mirror pair;
Figure 5 shows schematically an arrangement of reflective mirrors for producing a scanning pattern for illuminating at least the bottom surface of an object;
Figure 6 shows the propagation of some light beams in the arrangement according to figure 5;

Figure 7 shows a side view of a mirror pair used in one embodiment of the optical scanner;
Figure 8 shows schematically the arrangement of three mirror pairs in order to produce a scanning pattern of three lines able to illuminate an object from a predetermined side;
Figure 9 shows some light beams to explain the arrangement according to figure 8;
Figure 10 schematically shows an arrangement of an optical scanner able to produce one scanning pattern to illuminate at least the bottom surface of an object and two scanning patterns able to illuminate two different sides of the object;
Figures 11a-11e and 12a-12e illustrate several scanning patterns that my be produced by the optical scanner;
Figure 13 illustrates the application of an optical chopper.

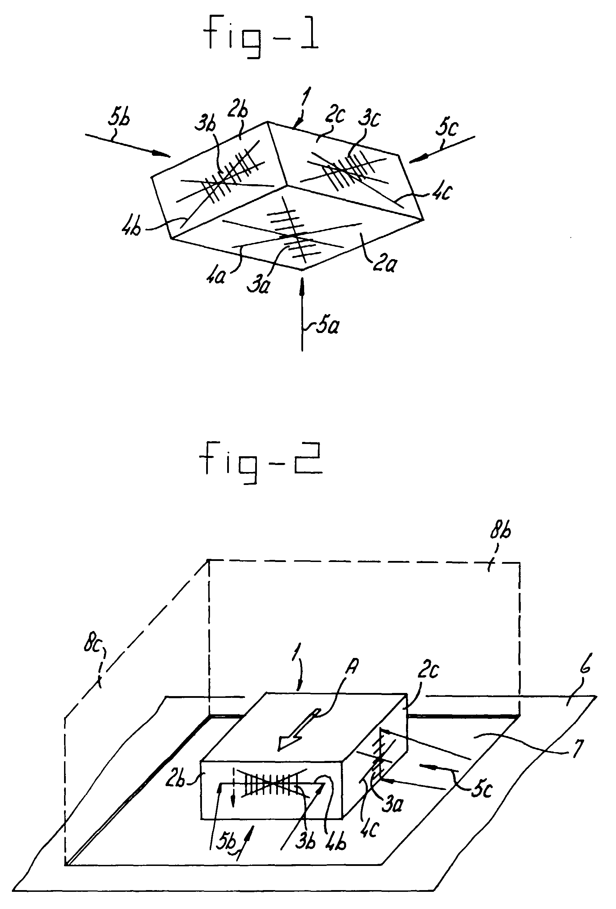

In figure 1 an example of a box-shaped object 1 to be scanned is shown. The object has six sides, three of which 2a, 2b, 2c are shown in the figure. Side 2a may comprise a bar code 3a, side 2b a bar code 3b, and side 2c a bar code 3c. Of course, a bar code may be printed on any other side of the object 1. Any of the bar codes may be printed at an arbitrary position with an arbitrary orientation. Assuming one would not know which side of the object 1 is provided with the bar code to be detected, at least six optimal multiple-directional scanning patterns 4a, 4b, 4c, ...., illuminating the object 1 from various directions 5a, 5b, 5c, ...., would be needed in order to be sure that the bar code could be detected.

In a practical situation, e.g. in a supermarket, goods with a bar code to be scanned may move through a scanning pattern. As shown in figure 2, the object 1 moves in a direction indicated by an arrow A across a scanning window 7. The scanning window 7 is part of a surface 6 of a housing of an optical scanner. It is assumed that the bar code to be detected is not located on the upper surface of the object 1.

Figure 2 shows the generation of two scanning patterns 4b and 4c directed to two different sides of the object 1 from two different directions 5b, 5c.

Both directions 5b and 5c are tilted with respect to the scanning window 7. Therefore, when the object is moving in the direction indicated by arrow A, the scanning pattern 4b will move in a direction normal to the moving direction. The scanning pattern 4c on the side 2c will move in a direction opposite to the direction of movement indicated by the arrow A. The latter also applies to the scanning pattern 4a which illuminates the bottom surface 2a of the object 1 (see figure 1).

Since the locations of the scanning patterns produced move across the surfaces the orientation of the scanning pattern lines are more important than are the exact locations.

It is assumed that a bar code is highly likely to be located either on the bottom surface 2a of the object 1 or at any of the sides 2b, 2c, ..... Therefore, the scanner according to the present invention is optimized to produce a first scanning pattern for reading codes on the bottom surface of the object 1, and at least two further scanning patterns for illuminating codes on two different sides of the object 1.

Figure 2 shows two virtual planes 8b and 8c, both being perpendicular to the scanning window 7. Moreover, the virtual planes 8b and 8c are perpendicular to each other. The orientations of the virtual planes 8b and 8c, respectively, are such that the scanning patterns 4b and 4c, respectively, are optimally projected in the virtual planes 8b and 8c, respectively.

Figure 3a shows schematically the basic elements of one embodiment of an optical scanner according to the present invention. Reference number 21a refers to first reflective means arranged to produce a scanning pattern which illuminates the bottom side of the object 1 from the direction 5a. Reference numbers 21b and 21c, respectively, refer to second and third mirror means, respectively, for producing scanning patterns for illuminating the sides 2b and 2c, respectively, of the object 1 from the directions 5b and 5c, respectively.

In the embodiment according to figure 3a, two light sources 10a, 10b are used. Preferably, the light sources 10a, 10b are laser sources. The light sources 10a, 10b produce light beams 11a, 11b, which are directed to a rotatable polygon 9. Preferably, the axis of rotation 14 of the polygon 9 is perpendicular to the scanning window 7 (figure 2). Moreover, preferably, the light beams 11a and 11b are perpendicular to the axis of rotation 14. The polygon 9 may have reflective facets substantially parallel to the axis of rotation 14. The light beams 11a, 11b are reflected by the reflective facets of the polygon 9 to produce sweeping light beams 12a and 12b, respectively. The speed of sweeping of the sweeping light beams 12a and 12b is twice the speed of rotation of the polygon. Therefore, the polygon 9 is preferred to have four facets. The total scanning field of the sweeping light beams 12a and 12b can cover 360°.

The sweeping light beam 12a sweeps across the mirror means 21a for producing the scanning pattern which illuminates the bottom surface of the object 1, as will be explained below. The sweeping light beam 12b sweeps across the mirror means 21b and 21c in order to produce scanning patterns in the virtual planes 8b and 8c, respectively, as will also be explained below.

Figure 3b shows an alternative arrangement for the arrangement shown in figure 3a.

Instead of a polygon 9, a rotatable mirror 13 is used. Preferably, the mirror 13 is inclined with respect to the axis of rotation 14 at an angle of substantially $\pi : 4$. Then, the light beam 11 incident upon the mirror 13 propagates along the axis of rotation 14 to be reflected as a sweeping light beam 12 which is directed perpendicular to the axis of rotation 14. The light beam 11 may be directed along the axis of rotation 14 either by means of a suitable mirror deflecting the light beam generated by a single light source or directly through a hollow shaft of a driving motor (not shown in figure 3b). The application of a hollow shaft of a driving motor is known per se, e.g. from U.S. patent 5,408,352. The application of the arrangement according to figure 3b will not be discussed further below since its description is similar to the application of the arrangement according to figure 3a.

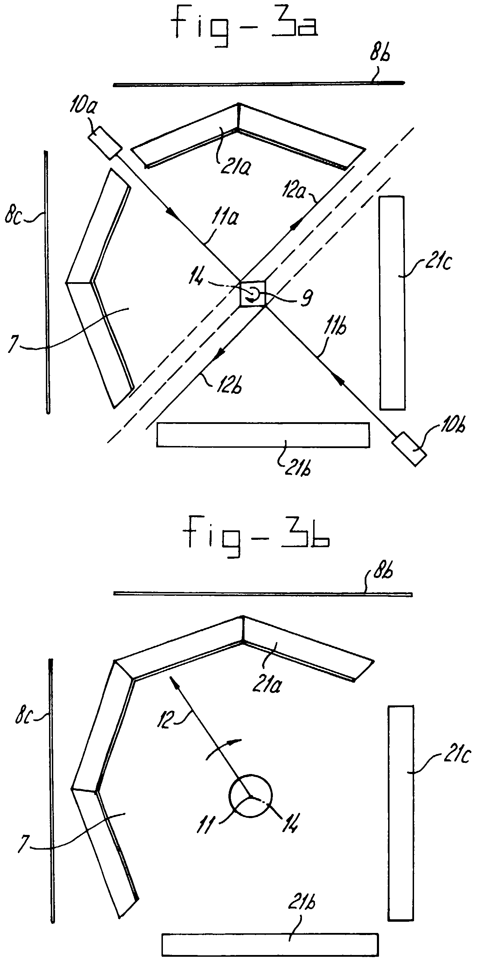

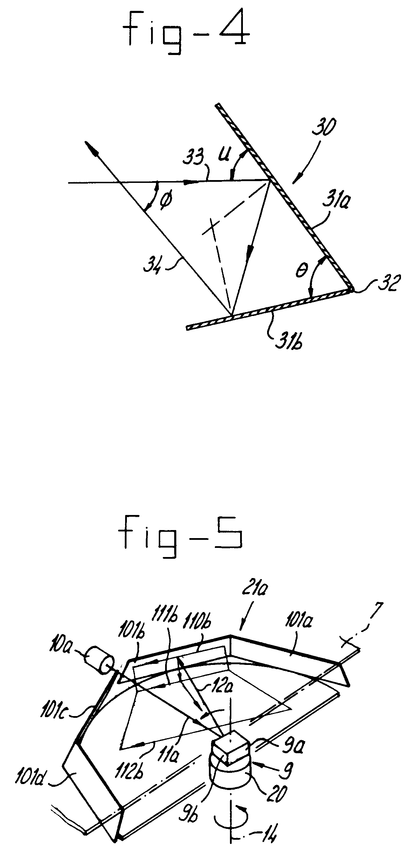

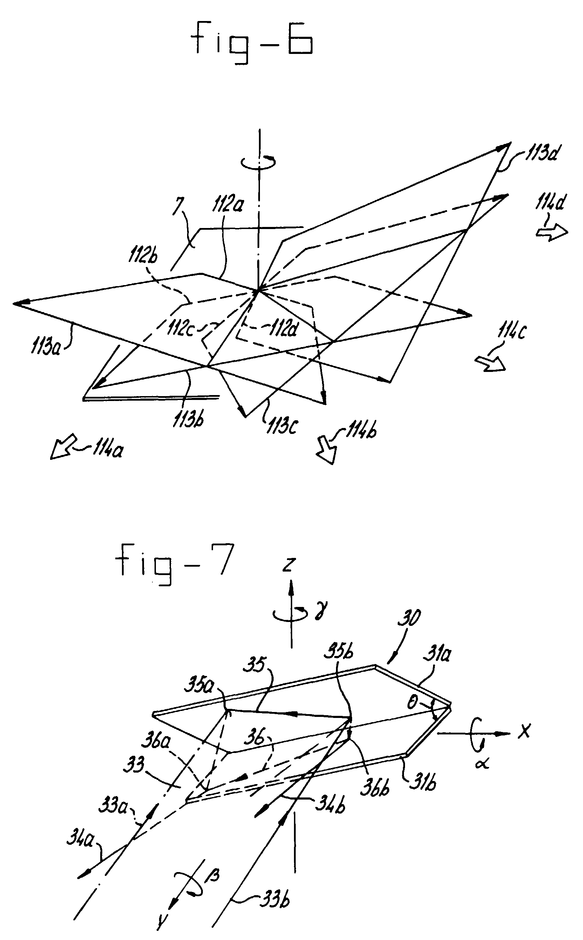

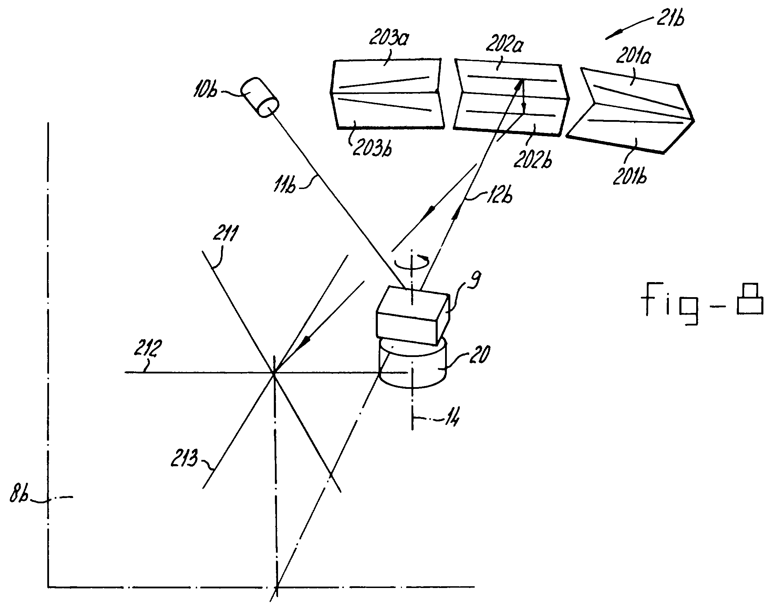

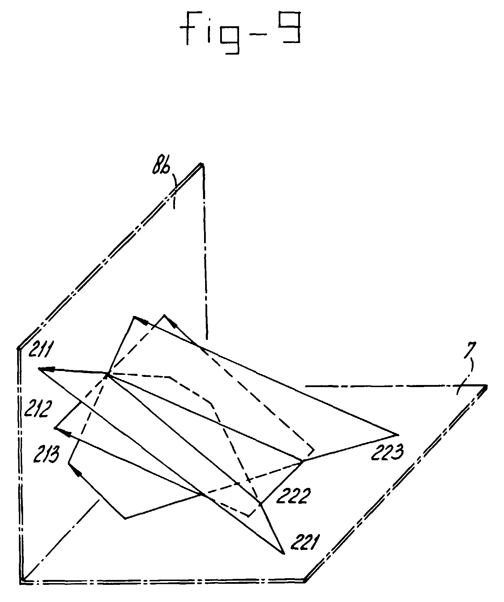

Preferably, the mirror means 21a, 21b and 21c make use of mirror pairs 30 as shown in figure 4. Figure 4 shows a cross-section through two mirrors 31a and 31b forming said mirror pair 30. The mirrors 31a and 31b have an intersection line 32 in a direction perpendicular to the sheet of the drawing. The two mirrors 31a and 31b have an apex angle θ. It is assumed that a light beam 33 is directed towards the mirror 31a and sweeps in a direction parallel to the intersection line 32. Then, one can easily prove that the light beam 34 resulting from the light beam 33 after being reflected by both mirrors 31a and 31b is located in a plane at an angle $\phi = \pi - 2\theta$ with respect to the incident plane which includes the light beam 33. Note that the angle $\phi$ does not depend on the angle u between the incident plane and the mirror 31a.

Several mirror pairs like the mirror pair 30, shown in figure 4, may be used to produce multiple-directional scanning patterns. The mirror 31b may be parallel to the scanning window 7 and perpendicular to the scanning axis 14. Mirror 31a must be directed such that a scanning line in a desired direction is generated.

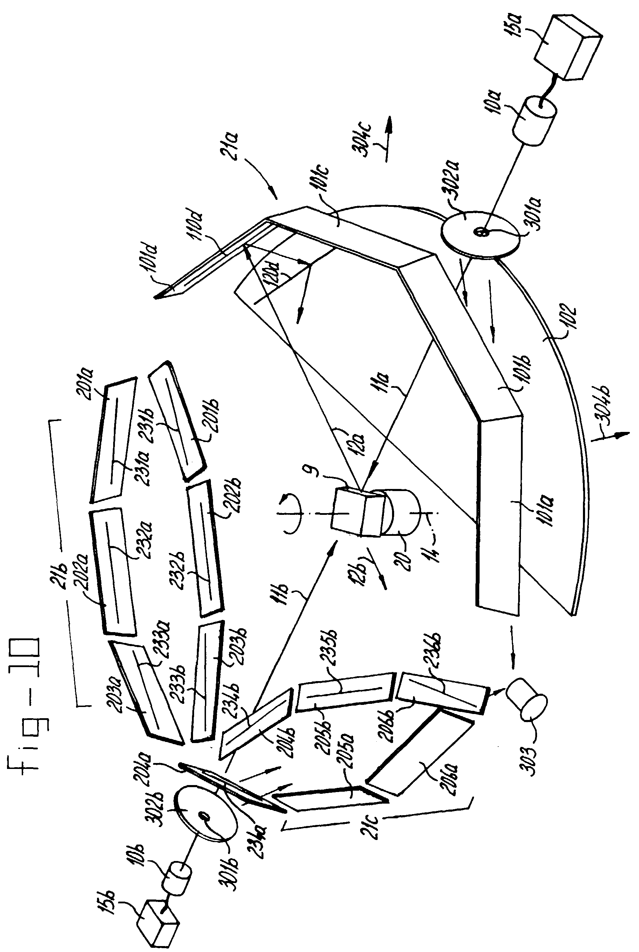

Figure 5 shows an example of the mirror means 21a. Essentially, the mirror means 21a comprise four mirror pairs 30 as shown in figure 4, albeit that mirror 31b is formed as one single mirror plate 102, common to four mirrors 101a, 101b, 101c, and 101d. The latter four mirrors are part of a mirror array arranged in half a circle surrounding the axis of rotation 14 of polygon 9. The four mirrors 101a, 101b, 101c and 101d are syametrically arranged with respect to the light beam 11a.

The polygon 9 comprises four reflective facets, two of which 9a, 9b are visible. The polygon 9 is rotated by a motor 20.

The light source 10a transmits its light beam 11a towards the polygon 9. The reflective facets 9a, 9b, ...., of polygon 9 reflect the incident light beam 11a in order to produce a sweeping light beam 12a which sweeps the mirrors 101a, 101b, 101c, and 101d.

In figure 5, reference number 110b denotes a moving scanning locus on mirror 101b produced by sweeping light beam 12a. Reflected by mirror 101b, in accordance with the explanation given above with reference to figure 4, a similar moving scanning locus is produced on the surface of the mirror plate 102, indicated by reference number 111b.

By reflection against the mirror plate 102 a moving scanning locus on the lower surface of the scanning window 7 is produced which takes the form of a scanning line 112b.

Since any of the mirrors 101a, 101b, 101c, and 101d have their own orientation they each produce a single scanning line, one after the other, on the lower surface of the scanning window 7. As is known to any person skilled in the art, the mirrors 101a, 101b, 101c and 101d can be arranged and tilted such that any required scanning pattern may be formed on the lower surface of the scanning window 7. The scanning pattern formed may be star-like, symmetrical about the axis of rotation 14. The number of scanning lines depends on the number of the mirrors 101a .... 101d.

Figure 6 shows the projection of four scanning lines 112a, 112b, 112c, and 112d on the scanning window 7, as produced by the arrangement according to figure 5. In the scanning window 7, the four scanning lines 112a .... 112d form a star-like pattern. Therefore, when the object 1 has a bar code on its bottom side located at the scanning window 7, it will be illuminated by a star-like scanning pattern.

Any of the scanning lines 112a, 112b, 112c, and 112d is produced by sweeping scanning beams. These sweeping scanning beams define four different planes, as indicated in figure 6. Actually, the scanning lines 112a .... 112d are the lines of intersection of these four planes with the scanning window 7. However, when the sweeping light beams pass the scanning window 7 in order to form a scanning pattern above the surface of the scanning window 7 scanning lines, like 113a, 113b, 113c, and 113d may be produced, which do not form a star-like scanning pattern anymore. These scanning lines 113a, 113b, 113c, 113d propagate in directions 114a, 114b, 114c, and 114d, respectively. When the directions 114a, 114b, 114c, and 114d are not perpendicular to the scanning window 7, even side surfaces of an object 1 may be illuminated by one of the scanning lines 113a .... 113d when the object 1 is located on the scanning window 7 such that it is not intersected by the axis of symmetry of the star-like scanning pattern 112a .... 112d.

Figure 7 shows the application of a mirror pair 30 which is illuminated by a sweeping light beam 33 sweeping in a plane defined by the light beams 33a and 33b, which plane is not parallel to the axis of intersection 32 between the mirrors 31a and 31b of the mirror pair 30.

One can define an x, y, z-coordinate system as shown in figure 7. The mirror pair 30 can be turned about the axis x, y and z, respectively, by angles α, β and γ, respectively. The incident laser beam 33 strikes and sweeps over the mirror 31a and forms a scan locus 35 on it. The scan locus 35 is not parallel to the intersection line 32. After being deflected by the mirror 31a, a scanning locus 36 on mirror 31b occurs. When light beams 33a and 33b are parallel, corresponding deflected beams 34a and 34b are also parallel and define an emerging scanning surface which includes the deflected light beam. Points 35a and 35b are the points of intersection between the mirror 31a and the light beams 33a and 33b, respectively. Points 36a and 36b, respectively, are the points of reflection of the light beams 33a, 33b with the mirror 31b after being reflected in the points 35a and 35b, respectively. The distance between the incident points 35a and 36a, differs from the distance between the points 35b and 36b. The incident scanning surface defined by the light beams 33a and 33b is not parallel to the emerging scanning surface as defined by the light beams 34a and 34b. By correct choice of the orientation of the mirror pair 30 relative to the x-, y- and z-axis, an emerging scanning plane from this mirror pair 30 can be established at any required direction. Moreover, the location and direction of the scanning line produced in a predetermined reading plane (like virtual planes 8b and 8c) can be established as required.

Figure 8 shows the generation of a multiple-directional scanning pattern consisting of three scanning lines 211, 212, 213 in plane 8b perpendicular to the scanning window 7. In order to produce the three scanning lines 211, 212, 213, three mirror pairs 201a/201b, 202a/202b, and 203a/203b, similar to the mirror pair 30 of figure 7, are used. Together they form the mirror means 21b. The light beam 11b from the light source 10b is incident on the polygon 9 and reflected by its reflective facets to form sweeping light beam 12b. As explained with reference to figure 7 each of the mirror pairs 201a/201b, 202a/202b, and 203a/203b produces one scanning line the orientation of which is determined by the orientation of the mirror pair concerned. The mirror pairs may be oriented such, that the scanning lines 211, 212 and 213 produced form a star-like pattern in the virtual plane 8b.

Between the mirror pairs 201a/201b, 202a/202b and 203a/203b, the light beam passes the scanning window 7 (not shown in figure 8) before producing the scanning lines 211, 212 and 213 on virtual plane 8b. Therefore, on scanning window 7 three scanning lines 221, 222 and 223 in accordance with the three scanning lines 211, 212 and 213 are formed, as shown in figure 9. If the mirror pairs 201a/201b, 202a/202b and 203a/203b are designed to produce a star-like scanning pattern on the virtual plane 8b, then, the scanning lines 221, 222 and 223 on the scanning window 7 do not form a star-like scanning pattern, however, still the scanning lines 221, 222 and 223 will be able to scan, e.g., bar codes at the bottom side of object 1 to be scanned. The scanning lines produced are also able to illuminate a side of the object 1 to be scanned. When moving the object 1 to and fro the virtual plane 8b, the scanning lines on the side of the object will move in a direction perpendicular to the scanning window 7. Moreover, by turning the object 1 to be scanned in a plane parallel to the scanning window 7, the angle between the scanning lines on the side of the object may be varied.

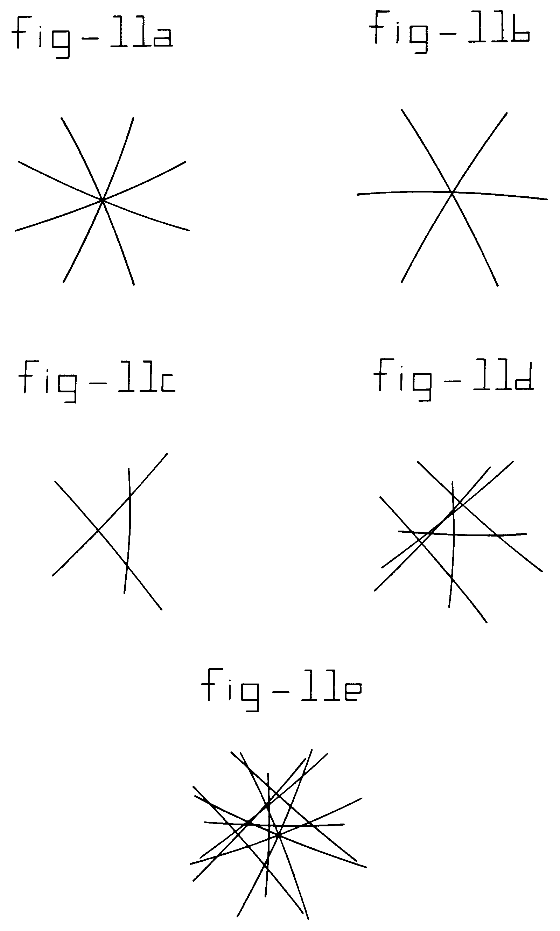

To produce a scanning pattern similar to the scanning pattern 211, 212 and 213 on the virtual plane 8c a similar set of mirror pairs 204a/204b, 205a/205b and 206a/206b may be applied, as shown in figure 10. The light beam generated by the light source 10a is arranged to be focused substantially at the scanning window 7 (not shown in figure 10). The light beam 11a from the light source 10a passes through a small hole 301a of a light collector 302a. After being reflected by the polygon 9 and the mirror array 101a .... 101d, and the mirror plate 102 the scanning pattern 112a .... 112d (see figure 6) is produced, as explained above with reference to figure 5. The scanning pattern produced is, preferably, star-like at the scanning window 7, as is schematically indicated in figure 11a.

After scanning the object 1 the light beam is scattered back and propagates backwards reflected by the mirror plate 102, the mirror array 101a .... 101d, and the reflective facets of the polygon 9. The reflective collector 302a deflects and concentrates the back-scattered light towards a photosensor 303 which is able to convert the optical signal into an electrical signal. The photosensor 303 is connected to suitable evaluation means (not shown) able to evaluate the electrical signal received and to detect, e.g., a scanned bar code.

In figure 10, the scanning locus line on mirror 101d has been indicated by reference number 110d, whereas the scanning locus line on mirror plate 102 resulting in accordance with the scanning locus line 110d is denoted by reference number 120d.

The light source 10b transmits its light beam 11b towards polygon 9 from a side opposite from the light source 10a. Light beam 11b propagates through a small hole 301b in a light collector 302b. As shown, the two mirror means 21b and 21c are located on different sides of the light beam 11b. After being reflected by the polygon 9 sweeping light beam 12b results which scans mirrors 201a, 202a, 203a, 204a, 205a and 206a, respectively, and produces scanning locus lines 231a, 232a, 233a, 234a, 235a (not visible), and 236a (not visible), respectively, on these mirrors. The sweeping light beam 12b is reflected to the mirrors 201b, 202b, 203b, 204b, 205b and 206b, respectively, on which scanning locus lines 231b, 232b, 233b, 234b, 235b and 236b, respectively, are formed. As explained above with reference to figure 8, the set of mirror pairs 21b produces, preferably, a star-like scanning pattern on virtual plane 8d. Similarly, the set of mirror pairs 21c produces, preferably, a star-like scanning pattern on virtual plane 8c.

Figure 11b shows the star-like scanning pattern produced on the virtual planes 8b and 8c. Figure 11c shows the scanning pattern as produced by either the set of mirror pairs 21b or the set of mirror pairs 21c on the scanning window 7.

Figure 11d shows the combined scanning lines at the scanning window 7 as produced by the sets of mirror pairs 21b and 21c. Figure 11e shows the scanning pattern produced on the scanning window 7 by all three mirror means 21a, 21b and 21c in combination. Thus, on scanning window 7 a complicated multiple scanning pattern is produced.

After reflection against the object 1 a scattered light beam occurs which is reflected backwards and propagates through mirrors 201b .... 206b, 201a .... 206a and the polygon 9 to the light collector 302b. The light collector 302b deflects and concentrates the scattered light beam to photosensor 303. In the arrangement shown, it is sufficient to use one photosensor 303. However, instead two photosensors can be used, as required.

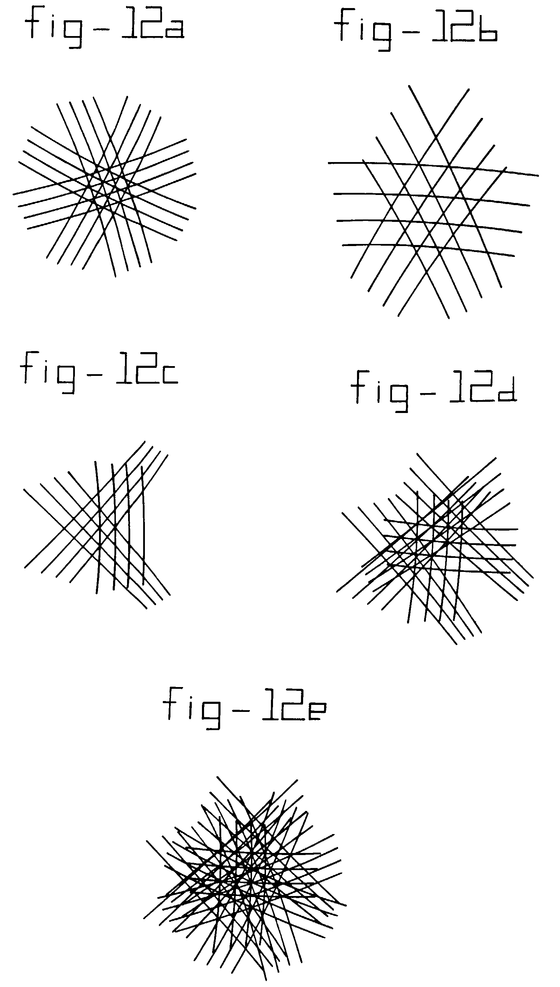

In one embodiment, the reflective facets 9a .... 9d of polygon 9 are oriented in the same direction e.g. parallel to the axis of rotation 14. However, in an alternative embodiment, the reflective facets 9a .... 9d may each have a different angle of inclination with respect to the axis of rotation 14. In this case, four times as many scanning lines will be produced. Figure 12a shows a multiple-directional scanning pattern in the scanning window 7 as produced by the mirror means 21a, in case of four reflective facets 9a .... 9d with different angles of inclination.

Figure 12b shows a scanning pattern in virtual plane 8b as produced by the set of mirror pairs 21b for such a polygon 9, whereas the corresponding scanning pattern in the scanning window 7 is shown in figure 12c. Assuming that the set of mirror pairs 21c produces similar scanning lines in the virtual plane 8c, the scanning pattern like the one shown in figure 12d will be produced by the sets of mirror pairs 21b and 21c in combination on the scanning window 7.

Figure 12e shows the scanning pattern on the scanning window 7 as produced by all three mirror means 21a, 21b and 21c in combination, in case of polygon 9 having four reflective facets 9a .... 9d with different angles of inclination.

When light sources 10a and 10b are energized at the same time, both light collectors 302a and 302b will collect scattered light at the same time and, consequently, the photosensor 303 will receive optical signals from both light collectors 302a and 302b at the same time. This may lead to undesired interference. Thus, in the arrangement according to figure 10, the light sources 10a and 10b have to be energized alternatively. When the light source 10a is energized, the light source 10b is preferably de-energized. Switching on and off of light sources 10a and 10b may be done with two synchronized power supplies 15a and 15b, respectively. Power supply 15a is connected to light source 10a whereas power supply 15b is connected to light source 10b. Instead of two different power supplies 15a and 15b, one power supply connected to both light sources 10a and 10b may be provided. In order to be able to produce a scanning pattern with four lines in a single direction, the switching period is, preferably, not shorter than one rotation period of the rotation of polygon 9. Thus, the power supplies 15a and 15b need to be coupled to the power supply (not shown) of motor 20 which drives the polygon 9. As is known to a person skilled in the art, one power supply could be applied for supplying power to the light sources 10a, and 10b, as well as power to the motor 20, synchronized as required.

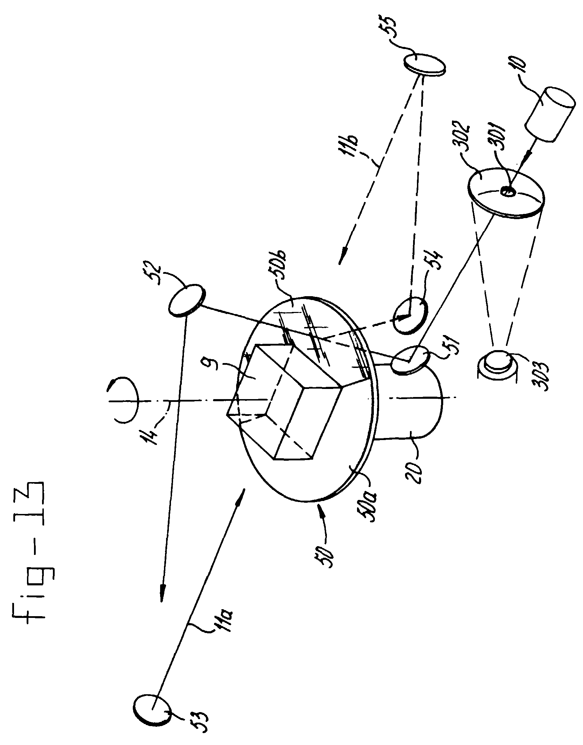

In order to allow easier switching from energizing light source 10a to light source 10b, and vice versa, at moments the light beam 11a, respectively 11b, crosses the line of intersection between two adjacent reflective facets of polygon 9 (and thus to complete writing entire scanning locus lines on the respective mirrors) advantageously optical choppers as presented in U.S. patent 5,315,428 may be used. Figure 13 presents only one example of such an optical chopper. However, any of the optical choppers as shown in the figures of this U.S. patent and as described in the corresponding description, may be used.

The principle of the optical chopper is to divide the light beam of one single light source 10 into a light beam 11a which is present during a predetermined part of any rotation of the polygon 9 and a light beam 11b which is present during the remaining part of any rotation of the polygon 9 and is directed to the polygon 9 from another side than is light beam 11a.

The light source 10, see figure 13, produces a light beam 11 which is transmitted through a hole 301 in a light collector 302 and is directed to a mirror 51.

The polygon 9 is supported by a disc 50 which is provided with a reflective part 50a and a transparent part 50b. The disc 50 rotates together with the polygon 9 when the apparatus is in operation.

When the light beam 11 is deflected by the mirror 51 it is directed to a mirror 52 as long as it intersects the transparent part 50b. The mirror 52 deflects the light beam to a mirror 53, which deflects the light beam, as light beam 11a, towards the reflective facets of polygon 9.

However, when the light beam after being deflected by the mirror 51 is intersected by the reflective part 50a, it is deflected to a mirror 54, which deflects it to a mirror 55. The mirror 55 deflects the light beam, as beam 11b, towards the polygon 9.

When the reflective part 50a has an area equal to the area of the transparent part 50b, any half period of a rotation of the polygon 9 either the light beam 11a or the light beam 11b is present. By designing the transition from the reflective part 50a to the transparent part 50b in correspondence with the transitions of adjacent reflective parts of the polygon 9, entire scanning lines will be produced, and will not be interrupted by suddenly switching between the light beams 11a and 11b.

The mirrors 52, 53, 54 and 55 may be located such that the beam from the light source 10 is focussed to window 7, and the virtual planes 8b/8c, respectively.

The advantage of the arrangement according to figure 13 is that one single light source is used, as well as only one single light collector 302. However, both light beams 11a and 11b can only be reflected by two reflective facets of polygon 9. Therefore, basic scanning patterns can only be multiplied by two and not by four, as in the arrangement according to figure 10.

It may be evident to a person skilled in the art, that the embodiments shown in the figures only relate to preferred embodiments. Other arrangements are possible without leaving the scope of the present invention. For instance, the number of mirror pairs of the mirror means 21b and 21c may be varied, as required. Moreover, the number of mirrors in the mirror array 101a .... 101d may be selected to be more than four or less than four. Instead of one mirror plate 102, several separate mirrors may be provided. The number of reflective facets of polygon 9 is not restricted to four. Also, any other number of light sources than 1 or 2 is conceivable.

The virtual planes 8b, 8c may be parallel to each other such that the scanner can read bar codes on two opposite sides of an object.

## Claims

1. An optical scanner to scan a code on an object, comprising:

   - a housing provided with a substantially flat, transparent scanning window (7) to support said object,
   - at least one light source (10; 10a, 10b) to generate at least one light beam (11; 11a, 11b),
   - deflection means (9; 13),
   - driving means (20) connected to said deflection means to rotate the deflection means with a predetermined speed of rotation about an axis of rotation (14) which has a predetermined angle of inclination with respect to said scanning window, said deflection means (9) being arranged to receive said at least one light beam (11; 11a, 11b) and to produce at least one sweeping light beam (12; 12a, 12b) about said axis of rotation (14),
   - first mirror means (21a) arranged to receive said at least one sweeping light beam (12; 12a, 12b) and to produce a first scanning pattern of at least one scanning line on said scanning window (7) for scanning codes at a bottom surface of the object,
   - second mirror means (21b) arranged to receive said at least one sweeping light beam (12; 12a, 12b) and to produce a second scanning pattern of at least one scanning line on a first virtual plane (8b) perpendicular to and extending outward from said scanning window (7) for scanning codes at a first side surface of the object, characterized in that
   - said scanner further comprises at least third mirror means (21c) arranged to receive said at least one sweeping light beam (12; 12a, 12b) and to produce a third scanning pattern of at least one scanning line on a second virtual plane (8c) perpendicular to and extending outward from said scanning window (7) for scanning codes at a second side surface of the object,
   - said second and third scanning pattern being formed by said second (21b) and third (21c) mirror means, respectively, by deflecting said at least one sweeping light beam towards said first (8b) and second (8c) virtual plane, respectively, such that it intersects said scanning window (7).

2. A scanner according to claim 1 wherein said first scanning pattern on said scanning window (7) is formed by said first mirror means (21a) by deflecting said at least one sweeping light beam towards said scanning window at a bevelled angle relative to said scanning window, such that codes on a third side surface of the object oriented such that they cannot be illuminated by either said second or said third scanning pattern, may be scanned by said first scanning pattern after having passed said scanning window.

3. A scanner according to claim 1 or 2 wherein said first mirror means (21a) comprise a mirror array having a predetermined number of mirrors (101a, ..., 101d) and a substantially flat mirror plate (102), each of said mirrors (101a, ..., 101d) being arranged to receive said at least one sweeping light beam and deflect it towards said mirror plate.

4. A scanner according to claim 3 wherein said mirror plate (102) is substantially parallel to said scanning window (7).

5. A scanner according to any of the preceding claims wherein said second mirror means (21b) comprises a first set of a predetermined number of mirror pairs (201a/201b, 202a/202b, 203a/203b), each mirror pair having two mirrors arranged in a predetermined relation relative to each other.

6. A scanner according to any of the preceding claims wherein said third mirror means (21c) comprises a second set of a predetermined number of mirror pairs (204a/204b, 205a/205b, 206a/206b), each mirror pair having two mirrors arranged in a predetermined relation relative to each other.

7. A scanner according to any of the preceding claims wherein said deflection means comprises one rotatable mirror (13) inclined with respect to said axis of rotation (14), and said at least one light beam, in operation, before impinging upon said rotatable mirror propagates substantially along said axis of rotation.

8. A scanner according to any of the claims 1 through 6 wherein said deflection means comprises a rotatable polygon (9) having a predetermined number of reflective facets.

9. A scanner according to claim 8 wherein said polygon (9) has four reflective facets and the scanner is provided with a first light source (10a) and a second light source (10b) arranged opposite said first light source, said first (10a) and second (10b) light source, in operation, transmitting a first (11a) and second (11b) light beam, respectively, towards said axis of rotation (14).

10. A scanner according to claim 9 wherein said first (10a) and second (10b) light source are connected to at least one power supply (15a, 15b) to alternatively supply power to said first (10a) and second (10b) light source in synchronism with the speed of rotation of said polygon (9).

11. A scanner according to claim 10 wherein, in operation, said at least one power supply (15a, 15b) switches supplying power from any one of said first (10a) and second (10b) light source to the other of said first (10a) and second (10b) light source any time said polygon (9) has completed one rotation period.

12. A scanner according to any of the claims 1 through 6 wherein the scanner comprises one single light source (10) and additional optical means (50a, 50b, 51, ..., 55) arranged to receive said light beam generated by said single light source (10) and to direct said light beam towards said deflecting means from a first predetermined direction during a first part of any rotation in operation and to direct said light beam towards said deflecting means from a second direction, opposite to said first direction, during a second part of any rotation in operation.

13. A scanner according to claim 12 wherein the additional optical means comprises an optical disc (50) rotatable together with said deflecting means (9) and having at least one reflective part (50a) and at least one transparent part (50b), a first (52), a second (53), a third (54) and a fourth (55) additional mirror, said at least one transparent part (50b) being arranged to pass said light beam from said light source during said first part of any rotation in operation towards said first additional mirror (52) to reflect it towards said second additional mirror (53) to reflect it towards said deflecting means (9) in said first direction, said at least one reflective part (50a) being arranged to reflect said light beam from said light source during said second part of any rotation in operation towards said third additional mirror (54) to reflected it towards said fourth additional mirror (55) to reflect it towards said deflecting means (9) in said second direction.

# fig-1

# fig-2

# Fig - 3a

8b

10a

21a

12a

11a

8c

14

9

21c

7

11b

12b

10b

21b

# Fig - 3b

8b

21a

8c

12

7

11

14

21c

21b

## fig-4

## fig-5

# fig-6

# fig-7

Fig-8

EP 0 802 496 A1

EP 0 802 496 A1

fig-9

15

Fig-10

fig-11a

fig-11b

fig-11c

fig-11d

fig-11e

fig - 12a

fig - 12b

fig - 12c

fig - 12d

fig - 12e

fig-13

EP 0 802 496 A1

## EUROPEAN SEARCH REPORT

**European Patent Office**

Application Number

EP 96 20 1039

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 444 958 (FUJITSU LTD) 4 September 1991<br>* the whole document * | 1-3,5,6, 8-11 | G06K7/10<br>G02B26/10 |
| A | EP-A-0 325 469 (SPECTRA PHYSICS) 26 July 1989<br>* the whole document * | 1-3,5-7, 12 | |
| D,A | US-A-5 459 308 (DETWILER PAUL O ET AL) 17 October 1995<br>* the whole document * | 1,3,5,8, 12 | |
| A | US-A-5 491 328 (RANDO JOSEPH F) 13 February 1996<br>* the whole document * | 1,3,5,6, 8-11 | |
| A | WO-A-94 01835 (SPECTRA PHYSICS SCANNING SYST) 20 January 1994<br><br>* the whole document * | 1-3,5,6, 8,9,12, 13 | |
| D,A | US-A-5 315 428 (PENG KE-OU) 24 May 1994<br>* abstract * | 1,3,8 | TECHNICAL FIELDS SEARCHED (Int.Cl.6)<br><br>G06K<br>G02B |
| D,A | US-A-5 408 352 (PENG KE-OU) 18 April 1995<br><br>* the whole document * | 1-3,8, 12,13 | |

The present search report has been drawn up for all claims

| Place of search | Date of completion of the search | Examiner |
|---|---|---|
| THE HAGUE | 26 September 1996 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)